# EUROPEAN PATENT SPECIFICATION

(11) **EP 4 641 146 B1**
(45) Date of publication and mention of the grant of the patent: **27.05.2026**
(21) Application number: 25171981.1
(22) Date of filing: 23.04.2025
(51) Int. Cl.: G01F 15/14, G01F 15/18, F16L 23/00

(54) **CENTERING DEVICE AND FLOWMETER UNIT**
ZENTRIERVORRICHTUNG UND DURCHFLUSSMESSGERÄT
DISPOSITIF DE CENTRAGE ET UNITÉ DE DÉBITMÈTRE

(30) Priority: 25.04.2024 JP 2024071444
(43) Date of publication of application: 29.10.2025
(73) Proprietor: Yokogawa Electric Corporation, Tokyo 180-8750 (JP)
(72) Inventor: MATSUO, Yuutarou, Musashino-shi, Tokyo, 180-8750, (JP)
(74) Representative: Winter, Brandl - Partnerschaft mbB

(56) References cited:
- EP-B1- 0 974 781
- EP-B1- 1 186 867
- EP-B1- 1 800 042
- EP-B1- 3 353 506
- US-A- 4 751 938

## Description

### CROSS-REFERENCE TO RELATED APPLICATION

The present application claims priority to Japanese Patent Application No. 2024-071444 filed in Japan on April 25, 2024.

### FIELD

The present invention relates to a centering device and a flowmeter unit.

### BACKGROUND

An existing flowmeter for measuring a flow rate of a fluid passing through the flowmeter has a flow inlet formed to let the fluid flow into the flowmeter and a flow outlet formed to let the fluid flow out from the inside of the flowmeter.

Pipes are connected to the flow inlet and the flow outlet. If the center axis of the flow inlet and the center axis of the flow channel in the pipe connected to the flow inlet are misaligned with each other or the center axis of the flow outlet and the center axis of the flow channel in the pipe connected to the flow outlet are misaligned with each other, the flow of the fluid at the connection is disturbed, a drift is thereby generated inside the flowmeter, and precision of measurement may thus be degraded.

In an example disclosed in Publication of Unexamined Utility Model Application No. H05-040825, a jig (centering device) having plural clamps fixed to a single beam serving as a base is used to reduce such misalignment between center axes, the plural clamps surrounding and supporting pipes and a flowmeter from outside. A similar example of prior art is disclosed in EP 3 353 506 B1.

However, the allowable error for precision of the external sizes and shapes of the pipes is large and the precision varies from product to product. Therefore, the center axes of the pipes and the center axis of the flowmeter surrounded and supported by the clamps from the outside may be misaligned with each other due to the variation in their external sizes and shapes, and the measurement precision may thus be degraded.

An object of the present invention is to obtain a centering device that enables minimization of misalignment and thus minimization of degradation of measurement precision of a flowmeter, the misalignment being between: the center axes of a flow inlet and a flow outlet of the flowmeter; and the center axes of flow channels in pipes connected to the flowmeter.

### SUMMARY

According to an aspect of an embodiment, a centering device, comprising: a plate portion that is plate-shaped and has an opening formed to penetrate the plate portion along a first direction that is a thickness direction of the plate portion, the opening being where a cylindrical portion that lets a fluid pass through the cylindrical portion is fitted in, wherein the plate portion has a recessed portion formed on a periphery of the plate portion, the recessed portion being recessed toward the center of the opening, and the recessed portion has a protruded portion formed on a bottom surface of the recessed portion.

### BRIEF DESCRIPTION OF THE DRAWINGS

FIG. 1 is a perspective view of a flowmeter unit according to a first embodiment;
FIG. 2 is an exploded perspective view of the flowmeter unit illustrated in FIG. 1 viewed from a flow outlet of its flowmeter;
FIG. 3 is a perspective view of a centering device according to the first embodiment;
FIG. 4 is a diagram of a recessed portion region of the centering device viewed along a first direction, the diagram exemplifying a case where a through bolt has an outer diameter smaller than a specified dimension due to an error;
FIG. 5 is a diagram of the recessed portion region of the centering device viewed along the first direction, the diagram exemplifying a case where the through bolt has an outer diameter larger than the specified dimension due to an error;
FIG. 6 is a diagram illustrating a first modified example of a protruded portion, the diagram being a partial enlarged perspective view of a recessed portion region that has been enlarged;
FIG. 7 is a diagram illustrating a second modified example of the protruded portion, the diagram being a partial enlarged perspective view of a recessed portion region that has been enlarged;
FIG. 8 is a diagram illustrating a third modified example of the protruded portion, the diagram being a partial enlarged perspective view of a recessed portion region that has been enlarged;
FIG. 9 is a diagram illustrating a fourth modified example of the protruded portion, the diagram being a partial enlarged perspective view of a recessed portion region that has been enlarged; and
FIG. 10 is a diagram illustrating a fifth modified example of the protruded portion, the diagram being a partial enlarged perspective view of a recessed portion region that has been enlarged.

### DESCRIPTION OF EMBODIMENTS

A centering device and a flowmeter unit, according to an embodiment of the present invention will hereinafter be described in detail by reference to the drawings.

### First Embodiment

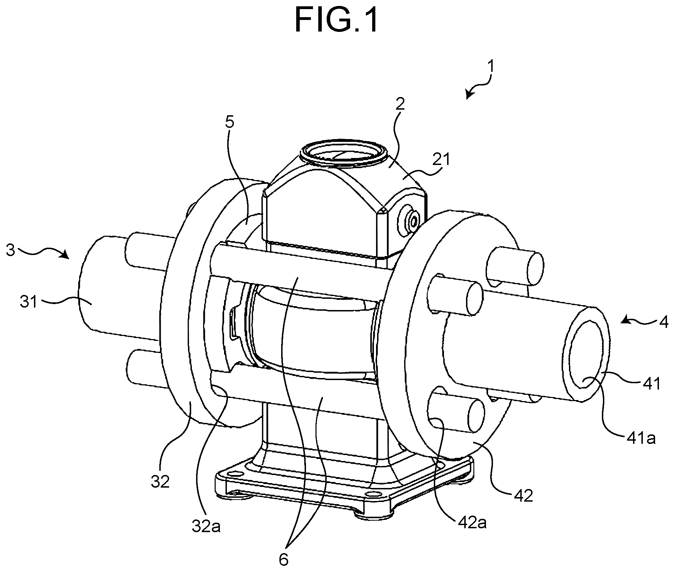

FIG. 1 is a perspective view of a flowmeter unit according to a first embodiment. A flowmeter unit 1 includes a flowmeter 2, a primary pipe unit 3, a secondary pipe unit 4, centering devices 5, and through bolts 6.

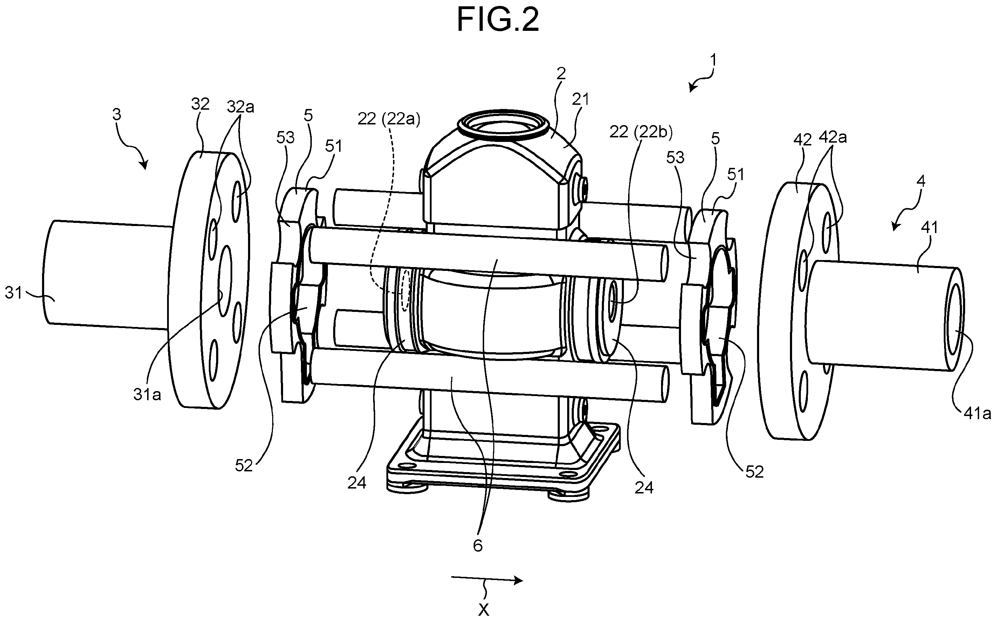

FIG. 2 is an exploded perspective view of the flowmeter unit illustrated in FIG. 1 viewed from a flow outlet of its flowmeter. The flowmeter 2 measures a flow rate of a fluid that passes through the flowmeter 2. The flowmeter 2 is of the so-called wafer-type. The flowmeter 2 of the wafer-type itself does not have flanges for being connected to pipes, and the pipes and the flowmeter 2 are connected to each other by the flowmeter 2 being put between flanges that the pipes have. The flowmeter 2 is, for example, an electromagnetic flowmeter but is not necessarily an electromagnetic flowmeter. A housing 21 of the flowmeter 2 has, formed therein, cylindrical portions 24 that are cylindrical and protrude in directions opposite to each other. The inside of each of the cylindrical portions 24 serves as a flow channel that lets the fluid flow into or out from the inside of the flowmeter 2. End portions of the flow channels serve as flow ports 22 that let the fluid flow into and out from the inside of the flowmeter 2 at end faces of the cylindrical portions 24.

The flow port 22 formed in one of the two cylindrical portions 24 serves as a flow inlet 22a. The flow port 22 formed in the other one of the two cylindrical portions 24 serves as a flow outlet 22b. In FIG. 2, the end face of the one of the cylindrical portions 24 is not visible and the flow inlet 22a is indicated by a broken line.

The flow inlet 22a and the flow outlet 22b communicate with the inside of the housing 21. The flow inlet 22a is an opening for letting the fluid flow into the housing 21. The flow outlet 22b is an opening for letting the fluid flow out from the inside of the housing 21.

The flow channels in the cylindrical portions 24 each have a circular cross section and the flow ports 22 are also each circularly shaped. The center axes of the flow channels in the two cylindrical portions 24 are aligned with each other. The direction in which these center axes extend will be referred to as a first direction and is indicated by an arrow X in FIG. 2, for example. The center axes of outer surfaces of the cylindrical portions 24 coincide with the center axes of the flow channels formed in the cylindrical portions 24.

The primary pipe unit 3 includes a primary pipe 31 and a primary flange 32. The primary pipe 31 has a cylindrical shape and the inside of the primary pipe 31 serves as a flow channel 31a that lets the fluid pass through the primary pipe 31. The primary pipe 31 is a pipe connected to the flow inlet 22a of the flowmeter 2. Therefore, the fluid that flows through the flow channel 31a of the primary pipe 31 flows into the flowmeter 2 through the flow inlet 22a.

The primary flange 32 is provided at one end of the primary pipe 31. The primary flange 32 is a plate-shaped member. The primary flange 32 is abutted against the end face of the cylindrical portion 24 having the flow inlet 22a formed therein. The primary flange 32 has plural through holes 32a formed to extend parallel to the first direction in a state where the primary flange 32 has been abutted against the end face of the cylindrical portion 24. Through bolts 6 are put through the through holes 32a. The distances between the center axis of the flow channel 31a in the primary pipe 31 and the center axes of the plural through holes 32a formed in the primary flange 32 are equal to one another.

The secondary pipe unit 4 includes a secondary pipe 41 and a secondary flange 42. The secondary pipe 41 has a cylindrical shape and the inside of the secondary pipe 41 serves as a flow channel 41a that lets the fluid pass through the secondary pipe 41. The secondary pipe 41 is a pipe connected to the flow outlet 22b of the flowmeter 2. Therefore, the fluid that flows through the flow channel 41a of the secondary pipe 41 is the fluid that has flowed out from the flowmeter 2 through the flow outlet 22b.

The secondary flange 42 is provided at one end of the secondary pipe 41. The secondary flange 42 is a plate-shaped member. The secondary flange 42 is abutted against the end face of the cylindrical portion 24 having the flow outlet 22b formed therein. The secondary flange 42 has plural through holes 42a formed to extend parallel to the first direction in a state where the secondary flange 42 has been abutted against the end face of the cylindrical portion 24. The through bolts 6 are put through the through holes 42a. The distances between the center axis of the flow channel 41a in the secondary pipe 41 and the center axes of the plural through holes 42a formed in the secondary flange 42 are equal to one another.

The through holes 32a formed in the primary flange 32 and the through holes 42a formed in the secondary flange 42 are formed at positions where the center axes of the through holes 32a and the center axes of the through holes 42a are aligned with each other in a state where the primary flange 32 and the secondary flange 42 have been abutted against the end faces of the cylindrical portions 24. Each of the through bolts 6 is thereby able to be put through one of the through holes 32a and one of the through holes 42a.

Screwing nuts onto the through bolts 6 in a state where the through bolts 6 have been put through the through holes 32a and the through holes 42a fastens the primary flange 32 and the secondary flange 42 onto the end faces of the cylindrical portions 24 of the flowmeter 2 in close contact with these end faces.

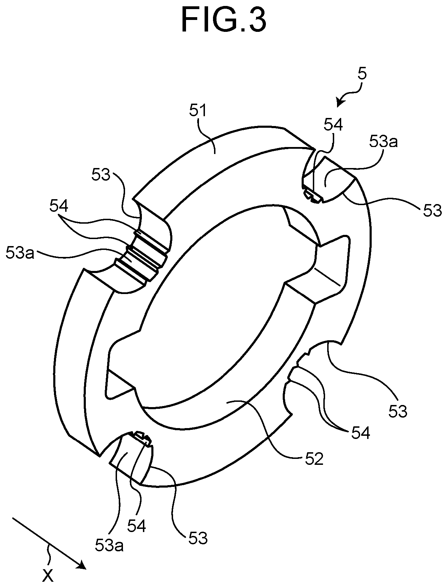

FIG. 3 is a perspective view of a centering device. The centering devices 5 each include a plate portion 51 formed in a plate shape. The plate portion 51 is formed of, for example, resin, but is not necessarily formed of resin. The plate portion 51 has an opening 52 formed therein. The opening 52 is formed to penetrate the plate portion 51 in a thickness direction of the plate portion 51.

As illustrated in FIG. 1 and FIG. 2, the cylindrical portions 24 of the flowmeter 2 are fitted in the openings 52 of the centering devices 5. A state where the cylindrical portions 24 of the flowmeter 2 have been fitted in the openings 52 may hereinafter be referred to as a state where the centering devices 5 have been mounted onto the flowmeter 2.

In the state where the centering devices 5 have been mounted onto the flowmeter 2, the center axes of the flow channels in the cylindrical portions 24 coincide with the center axes of the openings 52. As illustrated in FIG. 1 and FIG. 2, in the state where the centering devices 5 have been mounted onto the flowmeter 2, the thickness directions of the plate portions 51 are along the first direction indicated by the arrow X. In a case where the term, "first direction", is used hereinafter with respect to the centering devices 5, the term means the first direction in the state where the centering devices 5 have been mounted onto the flowmeter 2.

Plural recessed portions 53 recessed toward the center of the opening 52 have been formed on a periphery of each of the plate portions 51. The recessed portions 53 have each been formed in a groove shape extending along the first direction in the state where the centering devices 5 have been mounted onto the flowmeter 2.

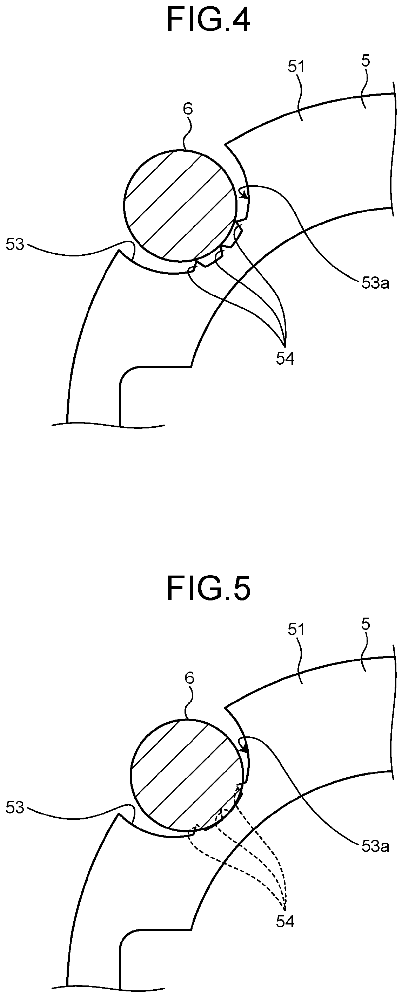

Bottom surfaces 53a of the recessed portions 53 each have a circular arc shape when viewed along the first direction. Plural protruded portions 54 have been formed on each of the bottom surfaces 53a of the recessed portions 53. The protruded portions 54 extend along the first direction. The plural protruded portions 54 have been formed to be arranged in a circumferential direction of each of the bottom surfaces 53a each having the circular arc shape. In other words, the plural protruded portions 54 have been formed to be arranged in a circumferential direction of the opening 52. In an example illustrated in FIG. 4, three protruded portions 54 have been formed alongside each other.

The centering devices 5 are respectively provided between the flowmeter 2 and the primary flange 32 and between the flowmeter 2 and the secondary flange 42. The recessed portions 53 have been formed so that the center axes of the bottom surfaces 53a that are circular arc surfaces and the center axes of the through holes 32a and through holes 42a are aligned with each other in a state where the centering devices 5 have been mounted onto the flowmeter 2 and the primary flange 32 and the secondary flange 42 have been abutted against the end faces of the cylindrical portions 24 of the flowmeter 2.

The flowmeter unit 1 is assembled as follows. Firstly, the centering devices 5 are mounted onto the flowmeter 2. Subsequently, in the state where the primary flange 32 and the secondary flange 42 have been abutted against the end faces of the cylindrical portions 24 of the flowmeter 2, the through bolts 6 are put through the through holes 32a, the through holes 42a, and the recessed portions 53. Subsequently, fastening the nuts onto both ends of the through bolts 6 fastens the primary flange 32 and the secondary flange 42, and the flowmeter unit 1 is thereby assembled. The primary flange 32 and the secondary flange 42 are thereby in close contact with the end faces of the cylindrical portions 24 of the flowmeter 2.

Generation of any drift in the fluid inside the flowmeter 2 needs to be minimized in order to prevent degradation of flow rate measurement precision by the flowmeter 2. A drift tends to be generated by a level difference generated in the flow channel at the connection between the primary pipe unit 3 and the flowmeter 2 or the connection between the secondary pipe unit 4 and the flowmeter 2.

This level difference in the flow channel is generated in a case where the center axis of the flow channel 31a in the primary pipe unit 3 and the center axis of the flow channel in the flowmeter 2 including the flow inlet 22a are misaligned with each other or the center axis of the flow channel 41a in the secondary pipe unit 4 and the center axis of the flow channel in the flowmeter 2 including the flow outlet 22b are misaligned with each other.

Allowable errors have been set in standards that the parts respectively conform to, the standards being on the outer diameters of the through bolts 6, the inner diameters of the through holes 32a formed in the primary flange 32, the inner diameters of the through holes 32a formed in the secondary flange 42, the distances between the center axis of the flow channel 31a and the center axes of the through holes 32a, and the distances between the center axis of the flow channel 41a and the center axes of the through holes 42a. The allowable errors in the respective standards set for the outer diameters of the through bolts 6, the inner diameters of the through holes 32a formed in the primary flange 32, the inner diameters of the through holes 42a formed in the secondary flange 42, the distances between the center axis of the flow channel 31a and the center axes of the through holes 32a, and the distances between the center axis of the flow channel 41a and the center axes of the through holes 42a will hereinafter be referred to simply as the "allowable errors of the parts".

Even if the through bolts 6, the primary flange 32, and the secondary flange 42 are designed and manufactured so that their central axes coincide with each other, the center axis of the flow channel 31a in the primary pipe unit 3 and the center axis of the flow channel in the flowmeter 2 including the flow inlet 22a may be misaligned with each other or the center axis of the flow channel 41a in the secondary pipe unit 4 and the center axis of the flow channel in the flowmeter 2 including the flow outlet 22b may be misaligned with each other, by the allowable errors of the parts mentioned above.

The centering devices 5 minimize the misalignment between the center axis of the flow channel 31a in the primary pipe unit 3 and the center axis of the flowmeter 2 including the flow inlet 22a and the misalignment between the center axis of the flow channel 41a in the secondary pipe unit 4 and the center axis of the flowmeter 2 including the flow outlet 22b.

For example, the centering devices 5 have been designed so that positions that outer peripheral surfaces of the through bolts 6 pass through are between the bottom surfaces 53a of the recessed portions 53 and apexes of the protruded portions 54 in a case where all of the through bolts 6, the through holes 32a, and the through holes 42a have been formed according to their specified dimensions.

FIG. 4 is a diagram of a recessed portion region of the centering device viewed along a first direction, the diagram exemplifying a case where a through bolt has an outer diameter smaller than a specified dimension due to an error. In a case where the outer diameter of a through bolt 6 is smaller than the specified dimension, the through bolt 6 is positioned at a position separate from the bottom surface 53a by the protruded portions 54 formed on the bottom surface 53a of the recessed portion 53 of the centering device 5.

The center axis of the through bolt 6 having the outer diameter smaller than the specified dimension is thereby able to be positioned at a position of the center axis of a through bolt 6, the position being where the through bolt 6 would be in a case where the through bolt 6 formed according to the specified dimension had been used.

FIG. 5 is a diagram of the recessed portion region of the centering device viewed along the first direction, the diagram exemplifying a case where the through bolt has an outer diameter larger than the specified dimension due to an error. In a case where the outer diameter of a through bolt 6 is larger than the specified dimension, the protruded portions 54 formed on the bottom surface 53a of the recessed portion 53 of the centering device 5 are scraped off by the outer peripheral surface of the through bolt 6 when the through bolt 6 is put through the through hole 32a and the through hole 42a or when the nut is fastened onto the through bolt 6. The protruded portions 54 being scraped off enables the through bolt 6 to be positioned at a position close to the bottom surface 53a.

The center axis of the through bolt 6 having the outer diameter larger than the specified dimension is thereby able to be positioned at a position of the center axis of a through bolt 6, the position being where the through bolt 6 would be in a case where the through bolt 6 formed according to the specified dimension had been used.

As described above, in both the case where the through bolt 6 smaller than the specified dimension is used and the case where the through bolt 6 larger than the specified dimension is used, positioning of the central axis is enabled. The primary flange 32 and the secondary flange 42 fastened by the through bolts 6 are thereby able to be positioned more accurately.

The misalignment between the center axis of the flow channel 31a in the primary pipe unit 3 and the center axis of the flowmeter 2 including the flow inlet 22a and the misalignment between the center axis of the flow channel 41a in the secondary pipe unit 4 and the center axis of the flowmeter 2 including the flow outlet 22b are thereby able to be minimized and occurrence of any drift inside the flowmeter 2 is thereby able to be minimized. Minimization of the occurrence of any drift inside the flowmeter 2 enables minimization of degradation in precision of measurement by the flowmeter 2.

The above description is on an example with respect to the outer diameters of the through bolts 6, but in a case where the inner diameters of the through holes 32a and 42a are different from specified dimensions, the protruded portions 54 also support the through bolts 6 or the protruded portions 54 are also scraped off, and the through bolts 6 are thereby positioned at positions closer to positions where the through bolts 6 would be positioned in a case where the through holes 32a and 42a had been formed to have the specified dimensions. Furthermore, in a case where the distances between the center axis of the flow channel 31a and the center axes of the through holes 32a or the distances between the center axis of the flow channel 41a and the center axes of the through holes 42a are different from a specified dimension, the protruded portions 54 also support the through bolts 6 or the protruded portions 54 are also scraped off, and the through bolts 6 are thereby positioned at positions closer to positions where the through bolts 6 would be positioned in a case where the through holes 32a and 42a had been formed at specified positions.

The above mentioned allowable errors of the parts are generally smaller than allowable errors for the outer diameter of the primary pipe 31 and the outer diameter of the secondary pipe 41. Therefore, the misalignment between the center axes is able to be minimized more precisely by use of the centering devices 5, as compared to a case where the misalignment between the center axes is minimized by use of a jig having plural clamps fixed to a beam serving as a base, the plural clamps surrounding and supporting the primary pipe 31 and the secondary pipe 41 from outside.

Supposed maximum values of the misalignment between the center axis of the flow channel 31a in the primary pipe unit 3 and the center axis of the flowmeter 2 including the flow inlet 22a and the misalignment between the center axis of the flow channel 41a in the secondary pipe unit 4 and the center axis of the flowmeter 2 including the flow outlet 22b are found by addition of the above mentioned allowable errors for the parts together.

The allowable errors differ according the standards that the parts conform to. The standards that the flowmeter 2 conforms to are, for example, ASME Class 150, ASME Class 300, EN PN 10, EN PN 16, EN PN 40, JIS F12, JIS 10K, or JIS 20K standards.

According to the allowable errors set by these standards, the maximum value of the above mentioned misalignment between the center axes ranges from 1.2 mm to 1.8 mm. Therefore, the protruded portions 54 preferably have a height of 1.8 mm or less from the bottom surface 53a.

The protruded portion 54 formed between two of the three protruded portions 54 may be formed to have a height lower than heights of the protruded portions 54 formed on both sides of the protruded portion 54. In this case, while positioning of a through bolt 6 in the circumferential direction of the bottom surface 53a is achieved by the protruded portions 54 formed on both sides, the protruded portion 54 formed between these protruded portions 54 is scraped off as needed in positioning of the through bolt 6 in the radial direction of the bottom surface 53a. Forming any protruded portion 54 having a lower height is not limited to the above described example. For example, the number of the protruded portions 54 is not necessarily three and may be four or more. Furthermore, the number of protruded portions 54 having lower heights is not necessarily one, and more than one protruded portion 54 may have a lower height. Furthermore, in a case where five or more protruded portions 54 are provided, the closer any one of the five or more protruded portions 54 is to the center, the lower the height that the protruded portion 54 may be formed to have. That is, a protruded portion 54 may just be formed between at least two protruded portions 54, the protruded portion 54 having a height lower than those of these at least two protruded portions 54. Furthermore, plural protruded portions 54 having lower heights may be formed between two protruded portions 54, and these lower heights of the plural protruded portions 54 may be the same or different from one another.

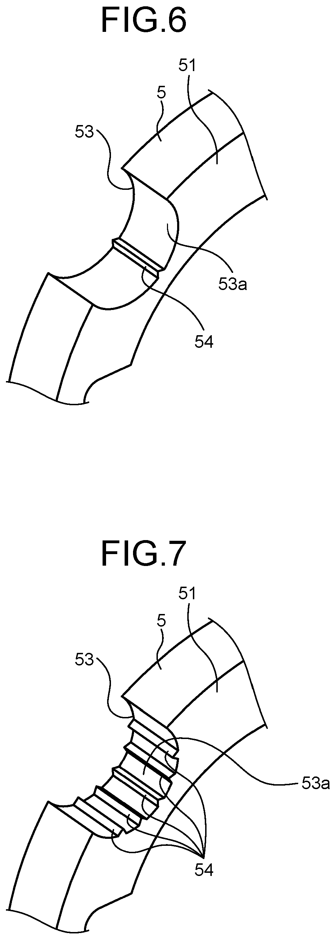

FIG. 6 is a diagram illustrating a first modified example of a protruded portion, the diagram being a partial enlarged perspective view of a recessed portion region that has been enlarged. As illustrated in FIG. 6, a single protruded portion 54 may be formed on a bottom surface 53a of a recessed portion 53.

FIG. 7 is a diagram illustrating a second modified example of a protruded portion, the diagram being a partial enlarged perspective view of a recessed portion region that has been enlarged. As illustrated in FIG. 7, five protruded portions 54 may be formed on a bottom surface 53a of a recessed portion 53. The number of the protruded portions 54 is not necessarily five and may be four, or six or more.

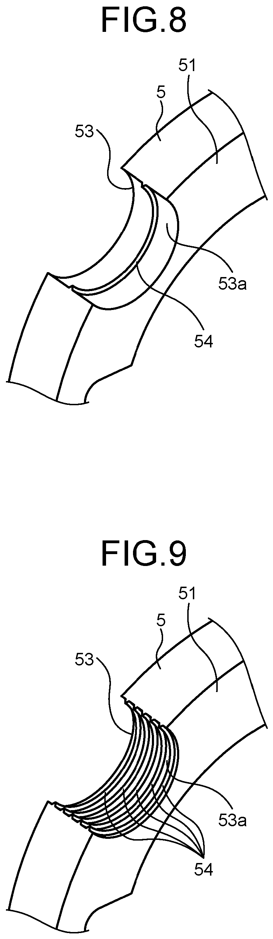

FIG. 8 is a diagram illustrating a third modified example of a protruded portion, the diagram being a partial enlarged perspective view of a recessed portion region that has been enlarged. As illustrated in FIG. 8, a single protruded portion 54 may be formed on a bottom surface 53a of a recessed portion 53, the single protruded portion 54 extending in a circumferential direction of the bottom surface 53a.

FIG. 9 is a diagram illustrating a fourth modified example of a protruded portion, the diagram being a partial enlarged perspective view of a recessed portion region that has been enlarged. As illustrated in FIG. 9, plural protruded portions 54 may be formed on a bottom surface 53a of a recessed portion 53, the plural protruded portions 54 extending in a circumferential direction of the bottom surface 53a.

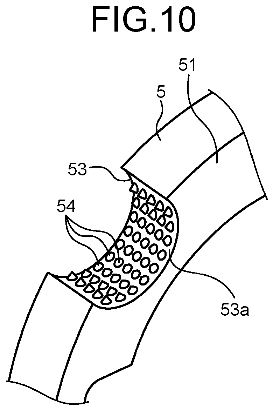

FIG. 10 is a diagram illustrating a fifth modified example of a protruded portion, the diagram being a partial enlarged perspective view of a recessed portion region that has been enlarged. As illustrated in FIG. 10, plural protruded portions 54 may be formed on a bottom surface 53a of a recessed portion 53, the plural protruded portions 54 being arranged in a circumferential direction and a first direction of the bottom surface 53a. The protruded portions 54 may each have, for example, a conical shape, a cubical shape, or a cuboidal shape.

### Summary of Effects

The centering devices 5 each include the plate portion 51 that is plate-shaped and that has the opening 52 formed to penetrate the plate portion 51 along the first direction that is the thickness direction, the opening 52 being where the cylindrical portion 24 is fitted in, the cylindrical portion 24 being where a fluid is passed through. The recessed portions 53 recessed toward the center of the opening 52 have been formed on the periphery of the plate portion 51 and the protruded portions 54 have been formed on the bottom surfaces 53a of the recessed portions 53.

The protruded portions 54 are scraped off according to errors in the inner diameters of the through holes 32a and 42a formed in the flanges 32 and 42 abutted against the end faces of the cylindrical portions 24, errors in the outer diameters of the through bolts 6, errors in the distances between the center axis of the flow channel 31a and the center axes of the through holes 32a, and errors in the distances between the center axis of the flow channel 41a and the center axes of the through holes 42a, and misalignment between the center axis of the flow ports 22 of the flowmeter 2 and the center axis of the flow channel in the pipes connected to the flowmeter 2 is thereby able to be minimized and degradation of precision of measurement by the flowmeter 2 is thus able to be minimized.

The protruded portions 54 may extend parallel to the first direction. The protruded portions 54 are thereby prevented from being fitted in the roots of the threads formed on the outer surfaces of the through bolts 6 and the through bolts 6 are thus stably supported by the protruded portions 54.

A plurality of the protruded portions 54 may be formed on the bottom surface 53a of the recessed portion 53, the plurality of the protruded portions 54 being arranged in the circumferential direction of the bottom surface 53a. By the formation of the plurality of the protruded portions 54, the through bolts 6 supported by the protruded portions 54 are less likely to be misaligned in the circumferential direction of the bottom surface 53a. Furthermore, the ease of the protruded portions 54 being scraped off is able to be adjusted by the number of the protruded portions 54 formed.

The number of the protruded portions 54 formed is three, and the protruded portion 54 formed between two of these protruded portions 54 may have a height lower than heights of the protruded portions 54 formed on both sides of that protruded portion 54. The positioning of the through bolt 6 in the circumferential direction of the bottom surface 53a is thereby achieved by the protruded portions 54 formed on both sides, and the protruded portion 54 formed between these protruded portions 54 is thus scraped off as needed in the positioning of the through bolt 6 in the radial direction of the bottom surface 53a.

The protruded portions 54 may extend parallel to the circumferential direction of the bottom surface 53a of the recessed portion 53. The protruded portions 54 extending parallel to the circumferential direction of the bottom surface 53a are also capable of supporting the through bolt 6 and being scraped off as needed.

A plurality of the protruded portions 54 may be formed to be arranged in the first direction. The ease of the protruded portions 54 being scraped off may be adjusted by the number of the protruded portions 54 formed.

A plurality of the protruded portions 54 may be formed to be arranged in the first direction and in the circumferential direction of the bottom surface 53a of the recessed portion 53. Forming the plurality of the protruded portions 54 to be arranged in the first direction and in the circumferential direction of the bottom surface 53a of the recessed portion 53 increases the range of adjustment of the ease of the protruded portions 54 being scraped off according to: the number of the protruded portions 54; and the positions where the protruded portions 54 are formed.

The heights of the protruded portions 54 from the bottom surface 53a of the recessed portion may be 1.8 mm or less. If the protruded portions 54 are too high, the resistance upon insertion of the through bolts 6 is increased and the work efficiency may thus be degraded or the through bolts 6 may thus be unable to be inserted. In consideration of the standards that the flowmeter 2 conforms to, the heights of the protruded portions 54 being 1.8 mm or less enables the resistance upon the insertion of the through bolts 6 to be prevented from being too large.

The flowmeter unit 1 includes the flowmeter 2 and the centering devices 5. The flowmeter 2 measures a flow rate of a fluid that passes through the flowmeter 2 and has: the cylindrical portions 24 formed to protrude in the directions opposite to each other from the housing 21; and the flow ports 22 that have been formed at the end faces of the cylindrical portions 24 and that let the fluid flow into and out from the inside of the housing 21. The centering devices 5 each include the plate portion 51 that is plate-shaped and has the opening 52 formed to penetrate the plate portion 51 along the first direction that is the thickness direction, the opening 52 being where the cylindrical portion 24 is fitted in. The recessed portions 53 recessed toward the center of the opening 52 have been formed on the periphery of each of the plate portions 51 and the protruded portions 54 have been formed on the bottom surface 53a of each of the recessed portions 53. In addition, the pair of flanges 32 and 42 abutted against the end faces of the cylindrical portions 24, the flanges 32 and 42 having the through holes 32a and 42a formed to penetrate the flanges 32 and 42 along the first direction, and the through bolts 6 that are put through the through holes 32a and 42a and the recessed portions 53 to fasten the pair of flanges 32 and 42 may be further included.

The protruded portions 54 are scraped off according to errors in the inner diameters of the through holes 32a and 42a formed in the flanges 32 and 42 abutted against the end faces of the cylindrical portions 24 and errors in the outer diameters of the through bolts 6, and misalignment between the center axis of the flow ports 22 of the flowmeter 2 and the center axis of the flow channel in the pipes connected to the flowmeter 2 is thereby able to be minimized and degradation of precision of measurement by the flowmeter 2 is thus able to be minimized.

The present invention has an effect of enabling a centering device to be obtained, the centering device enabling minimization of misalignment and thus minimization of degradation of measurement precision of a flowmeter, the misalignment being between: the center axes of a flow inlet and a flow outlet of the flowmeter; and the center axes of flow channels in pipes connected to the flowmeter.

## Claims

1. A centering device (5), comprising:
a plate portion (51) that is plate-shaped and has an opening (52) formed to penetrate the plate portion along a first direction that is a thickness direction of the plate portion, the opening being where a cylindrical portion (24) that lets a fluid pass through the cylindrical portion is fitted in, wherein
the plate portion has a recessed portion (53) formed on a periphery of the plate portion, the recessed portion being recessed toward the center of the opening,
**characterized in that**
the recessed portion has a protruded portion (54) formed on a bottom surface of the recessed portion.

2. The centering device according to claim 1, wherein the protruded portion extends parallel to the first direction.

3. The centering device according to claim 2, wherein a plurality of the protruded portions are formed to be arranged in a circumferential direction of the bottom surface of the recessed portion.

4. The centering device according to claim 3, wherein the plurality of the protruded portions include the protruded portion formed to be lower in height than the protruded portion formed next to the protruded portion formed to be lower in height.

5. The centering device according to claim 4, wherein the number of the protruded portions formed is three, and the protruded portion formed between two of the protruded portions has a height lower than heights of the protruded portions formed on both sides of the protruded portion.

6. The centering device according to claim 1, wherein the protruded portion extends parallel to a circumferential direction of the bottom surface of the recessed portion.

7. The centering device according to claim 6, wherein a plurality of the protruded portions are formed to be arranged in the first direction.

8. The centering device according to claim 1, wherein a plurality of the protruded portions are formed to be arranged in the first direction and in a circumferential direction of the bottom surface of the recessed portion.

9. The centering device according to any of claims 1 to 8, wherein the protruded portion has a height of 1.8 mm or less from the bottom surface of the recessed portion.

10. A flowmeter unit (1), comprising
a flowmeter (2) that measures a flow rate of a fluid that passes through the flowmeter, the flowmeter having: cylindrical portions formed to protrude in directions opposite to each other from a housing (21); and flow ports (22) that are formed at end faces of the cylindrical portions and let the fluid flow into and out from inside of the housing; and
a centering device according to claim 1.

11. The flowmeter unit according to claim 10, further comprising:
a pair of flanges (32,42) abutted against the end faces of the cylindrical portions, the pair of flanges having through holes (32a,42a) formed to penetrate the pair of flanges along the first direction; and
a through bolt (6) put through the through holes and the recessed portion to fasten the pair of flanges.

## Patentansprüche

1. Zentriervorrichtung (5), aufweisend:
einen Plattenabschnitt (51), der plattenförmig ist und eine Öffnung (52) hat, die ausgebildet ist, um den Plattenabschnitt entlang einer ersten Richtung zu durchdringen, die eine Dickenrichtung des Plattenabschnitts ist, wobei die Öffnung dort ist, wo ein zylindrischer Abschnitt (24), der ein Fluid durch den zylindrischen Abschnitt passieren lässt, eingepasst ist, wobei
der Plattenabschnitt einen Vertiefungsabschnitt (53) hat, der auf einer Peripherie des Plattenabschnitts ausgebildet ist, wobei der Vertiefungsabschnitt hin zu der Mitte der Öffnung vertieft ist,
**dadurch gekennzeichnet, dass**
der Vertiefungsabschnitt einen Vorsprungsabschnitt (54) hat, der auf einer Bodenoberfläche des Vertiefungsabschnitts ausgebildet ist.

2. Zentriervorrichtung gemäß Anspruch 1, wobei sich der Vorsprungsabschnitt parallel zu der ersten Richtung erstreckt.

3. Zentriervorrichtung gemäß Anspruch 2, wobei mehrere der Vorsprungsabschnitte ausgebildet sind, um in einer Umfangsrichtung der Bodenoberfläche des Vertiefungsabschnitts angeordnet zu sein.

4. Zentriervorrichtung gemäß Anspruch 3, wobei die mehreren der Vorsprungsabschnitte den Vorsprungsabschnitt beinhalten, der ausgebildet ist, um in der Höhe niedriger zu sein als der Vorsprungsabschnitt, der neben dem Vorsprungsabschnitt ausgebildet ist, der ausgebildet ist, um in der Höhe niedriger zu sein.

5. Zentriervorrichtung gemäß Anspruch 4, wobei die Zahl der ausgebildeten Vorsprungsabschnitte drei ist und der Vorsprungsabschnitt, der zwischen zwei der Vorsprungsabschnitte ausgebildet ist, eine Höhe hat, die niedriger ist als Höhen der Vorsprungsabschnitte, die auf beiden Seiten des Vorsprungsabschnitts ausgebildet sind.

6. Zentriervorrichtung gemäß Anspruch 1, wobei sich der Vorsprungsabschnitt parallel zu einer Umfangsrichtung der Bodenoberfläche des Vertiefungsabschnitts erstreckt.

7. Zentriervorrichtung gemäß Anspruch 6, wobei mehrere Vorsprungsabschnitte ausgebildet sind, um in der ersten Richtung angeordnet zu sein.

8. Zentriervorrichtung gemäß Anspruch 1, wobei mehrere der Vorsprungsabschnitte ausgebildet sind, um in der ersten Richtung und in einer Umfangsrichtung der Bodenoberfläche des Vertiefungsabschnitts angeordnet zu sein.

9. Zentriervorrichtung gemäß einem der Ansprüche 1 bis 8, wobei der Vorsprungsabschnitt eine Höhe von 1,8 mm oder weniger von der Bodenoberfläche des Vertiefungsabschnitts hat.

10. Durchflussmessereinheit (1), aufweisend:
einen Durchflussmesser (2), der eine Flussrate eines Fluids misst, das durch den Durchflussmesser passiert, wobei der Durchflussmesser aufweist: zylindrische Abschnitte, die ausgebildet sind, um in zueinander entgegengesetzten Richtungen von einem Gehäuse (21) vorzustehen; und Flussöffnungen (22), die an Endflächen der zylindrischen Abschnitte ausgebildet sind und das Fluid in das Innere des Gehäuses hinein und aus diesem heraus fließen lassen; und
eine Zentriervorrichtung gemäß Anspruch 1.

11. Durchflussmessereinheit gemäß Anspruch 10, ferner aufweisend:
ein Paar Flansche (32, 42), die an den Endflächen der zylindrischen Abschnitte anliegen, wobei das Paar Flansche Durchgangslöcher (32a, 42a) hat, die ausgebildet sind, um das Paar Flansche entlang der ersten Richtung zu durchdringen; und
einen Durchgangsbolzen (6), der durch die Durchgangslöcher und den Vertiefungsabschnitt eingesetzt ist, um das Paar Flansche zu befestigen.

## Revendications

1. Dispositif de centrage (5), comprenant :
une partie de plaque (51) qui est mise en forme de plaque et présente une ouverture (52) formée pour pénétrer la partie de plaque dans une première direction qui est une direction d'épaisseur de la partie de plaque, l'ouverture étant située là où est agencée une partie cylindrique (24) qui laisse un fluide passer à travers la partie cylindrique, dans lequel
la partie de plaque présente une partie en retrait (53) formée sur une périphérie de la partie de plaque, la partie en retrait étant en retrait vers le centre de l'ouverture, **caractérisé en ce que**
la partie en retrait présente une partie en saillie (54) formée sur une surface inférieure de la partie en retrait.

2. Dispositif de centrage selon la revendication 1, dans lequel la partie saillante s'étend parallèlement à la première direction.

3. Dispositif de centrage selon la revendication 2, dans lequel une pluralité des parties saillantes sont formées pour être agencées dans une direction circonférentielle de la surface inférieure de la partie en retrait.

4. Dispositif de centrage selon la revendication 3, dans lequel la pluralité des parties saillantes inclut la partie saillante formée pour être inférieure en hauteur à la partie saillante formée à côté de la partie saillante formée pour être inférieure en hauteur.

5. Dispositif de centrage selon la revendication 4, dans lequel le nombre des parties saillantes formées est de trois, et la partie saillante formée entre deux des parties saillantes présente une hauteur inférieure à celle des parties saillantes formées des deux côtés de la partie saillante.

6. Dispositif de centrage selon la revendication 1, dans lequel la partie saillante s'étend parallèlement à une direction circonférentielle de la surface inférieure de la partie en retrait.

7. Dispositif de centrage selon la revendication 6, dans lequel une pluralité des parties saillantes sont formées pour être agencées dans la première direction.

8. Dispositif de centrage selon la revendication 1, dans lequel une pluralité de parties saillantes sont formées pour être agencées dans la première direction et dans une direction circonférentielle de la surface inférieure de la partie en retrait.

9. Dispositif de centrage selon l'une quelconque des revendications 1 à 8, dans lequel la partie saillante présente une hauteur de 1,8 mm ou moins par rapport à la surface inférieure de la partie en retrait.

10. Unité de débitmètre (1), comprenant
un débitmètre (2) qui mesure un débit d'écoulement d'un fluide qui passe à travers le débitmètre, le débitmètre présentant : des parties cylindriques formées pour faire saillie dans des directions opposées l'une à l'autre à partir d'un boîtier (21) ; et des orifices d'écoulement (22) qui sont formés au niveau de faces d'extrémité des parties cylindriques et permettent au fluide de s'écouler à l'intérieur et à l'extérieur du boîtier ; et
un dispositif de centrage selon la revendication 1.

11. Unité de débitmètre selon la revendication 10, comprenant en outre :
une paire de brides (32, 42) mises en butée contre les faces d'extrémité des parties cylindriques, la paire de brides présentant des trous traversants (32a, 42a) formés pour pénétrer la paire de brides dans la première direction ; et
un boulon traversant (6) inséré à travers les trous traversants et la partie en retrait pour fixer la paire de brides.
